# EUROPÄISCHE PATENTANMELDUNG

(11) **EP 0 862 349 A2**
(43) Veröffentlichungstag der Anmeldung: **02.09.1998**
(21) Anmeldenummer: 98200159.6
(22) Anmeldetag: 22.01.1998
(51) Int. Cl.: H04Q 11/04, H04L 12/46

(54) **Koppeleinrichtung**

(30) Priorität: 01.02.1997 DE 19703833
(71) Anmelder: Philips Patentverwaltung GmbH, 22335 Hamburg (DE); Koninklijke Philips Electronics N.V., 5621 BA Eindhoven (NL)
(72) Erfinder: Reumerman, Hans-Jürgen, Dipl.-Ing., Röntgenstrasse 24, 22335 Hamburg (DE); Meuser, Thomas, Dr.-Dipl., Röntgenstrasse 24, 22335 Hamburg (DE); Pietzuch, Veit, Dipl.-Ing., Röntgenstrasse 24, 22335 Hamburg (DE); Klapdohr, Kai, Dipl.-Inform., Röntgenstrasse 24, 22335 Hamburg (DE)
(74) Vertreter: Volmer, Georg, Dipl.-Ing.

(57) **Zusammenfassung**

Die Erfindung betrifft eine Koppeleinrichtung (switch) für ein lokales nach dem asynchronen Transfermodus (ATM) arbeitendes lokales Netzwerk, welches einen Zentralspeicher (CCM) zur Zwischenspeicherung von auf Zubringerleitungen eintreffenden aus einzelnen ATM-Zellen gebildete Paketen (frames), eine Zentralspeichersteuereinrichtung für die Steuerung der Speicherung im Zentralspeicher (CCM) und des Einlese- und Auslesevorganges der Pakete in den bzw. aus dem Zentralspeicher (CCM) und einen von der Zentralspeichersteuereinrichtung gesteuerten Demultiplexer zur Weiterleitung der Pakete (Frames) auf Abnehmerleitungen enthält, wobei darüber hinaus Zählmittel zum Zählen der in den Zentralspeicher (CCM) eintretenden ATM-Zellen und Löschmittel zum paketweisen Löschen von ATM-Zellen zur Überlaufverhinderung des Zentralspeichers (CCM) vorgesehen sind. Um eine effiziente Speicherverwaltung auch für sehr kleine Zellenspeicher, insbesondere unter 1000 Zellen, zu ermöglichen, ist erfindungsgemäß vorgesehen, daß die Zentralspeichersteuereinrichtung mindestens eine dem Zentralspeicher vorgeordnete Komparatoreinrichtung aufweist, die mit den Zählmitteln und einer Steuerlogik derart zusammenwirkt, daß beim Erreichen eines vorgebbaren Schwellenwertes (L_{disc}) für den Füllstand des Zentralspeichers (CCM) eine vorgebbare Anzahl von Verbindungen (VC) anhand der Reihenfolge des Eintreffens der der jeweiligen Verbindung (VC) zugeordneten ATM-Zellen definiert werden, und daß jede ATM-Zelle des zum definierten VC-Wert gehörigen Paketes vor dem Eintreffen in den Zentralspeicher gelöscht wird.

## Beschreibung

Die Erfindung betrifft eine Koppeleinrichtung (switch) für ein lokales nach dem asynchronen Transfermodus (ATM) arbeitendes lokales Netzwerk, welches einen Zentralspeicher (CCM) zur Zwischenspeicherung von auf Zubringerleitungen eintreffenden aus einzelnen ATM-Zellen gebildete Paketen (Frames), eine Zentralspeichersteuereinrichtung für die Steuerung der Speicherung im Zentralspeicher (CCM) und des Einlese- und Auslesevorganges der Pakete in den bzw. aus dem Zentralspeicher (CCM) und einen von der Zentralspeichersteuereinrichtung gesteuerten Demultiplexer zur Weiterleitung der Pakete (frames) auf Abnehmerleitungen enthält, wobei darüber hinaus Zählmittel zum Zählen der in den Zentralspeicher (CCM) eintretenden ATM-Zellen und Löschmittel zum paketweisen Löschen von ATM-Zellen zur Überlaufverhinderung des Zentralspeichers (CCM) vorgesehen sind.

In lokalen Netzwerken, welche nach dem Asynchronen-Transfer-Modus (ATM) arbeiten, werden aus den zu übertragenden Informationen (Nachrichten) Blöcke fester Länge gebildet. Jeder Block wird mit einer zusätzlichen Steuerinformation zu einer Übertragungseinheit ergänzt, die als ATM-Zelle bezeichnet wird. Jede ATM-Zelle setzt sich dabei zusammen aus einem Zellenkopf von 5 Byte Länge (header) und einem Informationsfeld von 48 Byte Länge (payload), in dem die zu übertragenden Informationen enthalten sind.

Bei ATM-Netzen wird die verfügbare Übertragungskapazität (Bandbreite) eines Breitbandkanals für unterschiedliche Übermittlungsdienste, wie Datenübermittlungsdienste, Sprachübermittlungsdienste, Videodienste (z.B. Video-Konferenzen oder Video-Datenbanken) oder bei der Übermittlung von Multimedia-Informationen, bei denen Sprachen-, Daten- und Video-Informationen miteinander kombiniert sind, in sogenannte virtuelle Pfade (virtual path, VP) unterteilt. Ein virtueller Pfad repräsentiert wiederum eine Gruppe von virtuellen Kanälen (virtual channel, VC). Beim Aufbau einer virtuellen Verbindung zwischen einem Sender und einem Empfänger wird zunächst der geeignete virtuelle Pfad ausgewählt. Anschließend wird ein Teil der Bandbreite als virtueller Kanal dieses Pfades belegt. Für die Identifizierung des virtuellen Kanals wird die Kennung VCI (virtual channel identifier) verwendet, während für die Identifizierung der Pfade die Kennung VPI (virtual path identifier) verwendet wird. Die Angabe von VPI und VCI stellt somit die logische Kennung für eine einzelne Verbindung dar.

Wird eine ATM-Verbindung über eine physikalische Leitung realisiert, so steht dieser ATM-Verbindung die volle Übertragungsrate der physikalischen Leitung zur Verfügung. Da keine Zuordnung zwischen Übertragungsraten innerhalb von physikalischen Leitungen und den einzelnen ATM-Verbindungen stattfindet, muß der Verkehr einer ATM-Verbindung mit bestimmten Parametern festgelegt werden. Diese Festlegung ist notwendig, um einerseits Überlast-Situationen im Netz zu vermeiden und um andererseits eine bestimmte Güte von ATM-Verbindungen zu gewährleisten.

Um dies zu erreichen, muß ein Verkehrsvertrag (traffic contract) zwischen einer ATM-Anwendung und dem Netz hinsichtlich der gewünschten ATM-Verbindung geschlossen werden. Das ATM-Netz entscheidet über die Annahme einer neuen Verbindung aufgrund der vorgegebenen Verkehrsparameter, so daß der Verkehrsvertrag erst mit der Annahme einer ATM-Verbindung zustande kommt. Damit garantiert das ATM-Netz die Einhaltung der von der ATM-Anwendung angeforderten Dienstgüte der Verbindung, wenn diese Anwendung die im Verkehrsvertrag ausgehandelten Werte von Verkehrsparametern einhält. Zur Überwachung der Verkehrsparameter dient die UPC-Funktion (user-parameter-control).

Je nach der unterstützten ATM-Anwendung werden bestimmte ATM-Anpassungsschichten AAL (ATM-adaption layer) definiert. Im AAL wird die Abbildung der Nutzdaten, also größerer Datenpakete oder synchroner Bit-Ströme, auf die jeweils 53 byte großen ATM-Zellen realisiert. Dabei existieren verschiedene Varianten:

### AAL 1

Diese Variante realisiert einen synchronen Bit-Strom und wird zur Anpassung von synchronen Sprach- oder Video-Kanälen, nicht aber für die paketorientierte Datenkommunikation, genutzt.

### AAL 3/4

Hierbei handelt es sich um die ursprünglich von der CCITT definierte Anpassungsschicht für die paketorientierte Datenkommunikation, die zusätzliche Kontrollstrukturen zum Multiplexen von verschiedenen Datenpaketen auf einen gemeinsamen virtuellen Kanal enthält. Dieser Diensttyp unterstützt sowohl verbindungslose als auch verbindungsorientierte LAN-Kommunikation in ATM-Netzen.

### AAL 5

Hierbei handelt es sich um den derzeit allgemein üblichen Standard für die Datenkommunikation in lokalen ATM-Netzen, wobei AAL 5 gegenüber AAL 3/4 sehr viel einfacher aufgebaut ist. Es können bei AAL 5 bis zu 48 bytes, anstatt 44 wie beim AAL 3/4, als Nutzlast pro ATM-Zelle transportiert werden, wodurch der Anteil an Verwaltungsinformation sinkt.

Bei einem Übertragungsfile von z.B. 2¹⁶ Bit läßt sich mit Hilfe von AAL 5 die Information mit ca. 1300 ATM-Zellen übertragen, wobei im Header der letzten Zelle dabei das sogenannte EOM (end of message) Bit zur Erkennung des Informationsendes abgelegt ist.

Ein System der eingangs genannten Art ist bekannt aus "Dynamics of TCP Traffic over ATM Networks", Romanow, Floyd et, IEEE-JSAC, vol. 13, No. 4, Mai 1995, Seiten 633-644. Dieses System bezieht sich auf TCP- (transmission control protocol) Verbindungen in ATM-Netzwerken, wobei die Aufgabe besteht, einen Überlauf (congestion) des Zentralspeichers in der Koppeleinrichtung zu vermeiden. Dieses System geht dabei aus von einer Überlaufkontrolle für den Zentralspeicher nach dem sogenannten frame-discard-Verfahren. Hierbei werden die eintreffenden Frames im Zentralspeicher verbindungsorientiert (VC-orientiert) zwischengespeichert und für den Fall, daß ein Überlauf am Ausgang der Koppeleinrichtung eintritt, der gesamte Frame, der zu einem bestimmten VC gehört, gelöscht.

Dieses bekannte System arbeitet dabei insbesondere nach dem sogenannten early-packet-discard-Verfahren, welches wie folgt abläuft: Wenn die Gefahr besteht, daß ein zentraler Zellenspeicher überläuft, wird das gesamte Paket, sobald nur eine Zelle defekt ist, gelöscht. Der Löschvorgang erfolgt dabei derart, daß noch ausstehende Zellen eines Paketes nicht mehr gespeichert werden. Hierdurch belegt das zu löschende Paket keinen Speicherplatz. Die Anzahl der Datenwiederholungen (retransmissions) beschränkt sich dabei auf das jeweils gelöschte Paket.

Bei dem bekannten System stellt die sogenannte "Resource Management Application" den Füllstand des verwendeten Puffers fest und bestimmt, welches Paket zu löschen ist. Der hierdurch eintretende Effekt auf den Füllstand wird weiter beobachtet und eventuell weitere Pakete gelöscht. Solange der Füllstand noch mindestens den vorgeschriebenen Schwellwert erreicht, wird der Löschvorgang von Paketen von verschiedenen Verbindungen fortgesetzt. Dieses bekannte Verfahren ist geeignet für Speicher mit sehr großer Speicherkapazität, beispielsweise für Kapazitäten von mehr als 10000 Zellen. Ein Nachteil dieses Systems besteht allerdings darin, daß aufgrund der VC-orientierten Aufteilung des Speichers ein speziell auf diese Aufteilung ausgelegter Organizer erforderlich ist. Da der Anpassungsvorgang in Bezug auf den Füllstand des Speichers stets einige Millisekunden dauert, tritt ein Trägheitseffekt auf, der die Anwendung des "early packet drop"- Verfahrens für kleine (dezentral organisierte) Zellen-Buffer ungeeignet macht.

Der Erfindung liegt die Aufgabe zugrunde, ein System der eingangs genannten Art dahingehend weiterzuentwickeln, daß es für Zentralspeicher mit geringen Größen, also unterhalb von 1000 Zellen, geeignet ist.

Diese Aufgabe wird erfindungsgemäß dadurch gelöst, daß die Zentralspeichersteuereinrichtung mindestens eine dem Zentralspeicher vorgeordnete Komparatoreinrichtung aufweist, die mit den Zählmitteln und einer Steuerlogik derart zusammenwirkt, daß beim Erreichen eines vorgebbaren Schwellenwertes (L_{disc}) für den Füllstand des Zentralspeichers (CCM) eine vorgebbare Anzahl von Verbindungen (VC) anhand der Reihenfolge des Eintreffens der der jeweiligen Verbindung (VC) zugeordneten ATM-Zellen definiert werden, und daß jede ATM-Zelle des zum definierten VC-Wert gehörigen Paketes vor dem Eintreffen in den Zentralspeicher gelöscht wird.

Die Erfindung zeichnet sich dadurch aus, daß in Abhängigkeit vom Füllzustand des Speichers, der durch die Anzahl der gespeicherten ATM-Zellen mittels eines Zählers ermittelt wird, die erste ankommende Zelle sowie jede nachfolgende Zelle eines jeden eintreffenden Paketes, welches einem bestimmten VC zugeschrieben ist, gelöscht wird. Dies bedeutet, daß Maßnahmen ergriffen werden, um je nach Verbindungsaufbau möglichst viele empfangene Zellen so zu treffen, daß nur eine geringe Anzahl der eintreffenden Pakete gelöscht wird. Die erfindungsgemäße Lösung ermöglicht, daß die Koppeleinrichtung selbst die zu löschenden Pakete festlegt. Dazu werden bestimmte Verbindungen aus dem Gesamtzellenstrom nach Prioritätskriterien herausgefiltert und gelöscht. Es ergibt sich somit ein ähnliches Verhalten wie beim frame-discard-Verfahren, insbesondere das early-packet-drop-Verfahren, jedoch eine Anwendbarkeit bis hin zu sehr kleinen Zellengrößen (on-chip buffer) von beispielsweise nur 128 Zellen, bei denen es besonders auf optimale Speicherverwaltung ankommt. Die erfindungsgemäß vorgeschlagene Zentralspeicher-Managment-Systematik trägt der Tatsache Rechnung, daß "bösartige" Anwender auftreten können, die zu einer Überlastung der Koppeleinrichtung führen können, indem sie ihren Verkehrskontrakt verletzen. Pakete solcher Anwender werden erfindungsgemäß bevorzugt aufgespürt und gelöscht. Auch bei solchen Anwendern, die prinzipiell den Verkehrskontrakt einhalten, kann es von Zeit zu Zeit zu Speicherüberlastungen kommen. Die vorgebbare Anzahl der definierten Verbindungen VC ergibt sich dadurch, daß im seriellen Datenstrom die VC-Werte der jeweils, seriell aufeinanderfolgenden ATM-Zellen unterschiedlicher VC-Werte erfaßt und die unterschiedlichen VC-Werte in einer Tabelle abgelegt werden. Eine vorgebbare Anzahl, beispielsweise sieben, werden als VC-Werte einer zu löschenden Zelle definiert, d.h. jedes Mal dann, wenn ein solcher VC-Wert in der Zelle erkannt wird, wird diese Zelle gelöscht und somit verhindert, daß weiterer Speicherplatz für den zugehörigen Frame belegt wird.

Eine bevorzugte Ausführungsform der Erfindung sieht vor, daß der mindestens eine Komparator mit einer Löschtabelle (discard table) verbunden ist, die die Verbindungskennungen (VC) der zu löschenden Frames enthält, wobei die Löschtabelle die Löschmittel zum Löschen jeder eintreffenden ATM-Zelle aktiviert, deren Verbindungskennung (VC) in der Löschtabelle abgelegt ist. Das Vorsehen einer solchen Löschtabelle läßt sich geeignet mit der Steuerlogik kombinieren, so daß ein einfacher Aufbau erreicht wird und die Löschtabelle auf diese Weise durch den Komparator und diesem zugeordneten Zähler getriggert wird.

Wenn nach einer weiteren Variante der Erfindung vorgesehen ist, daß die Zentralspeichersteuereinrichtung Auslesemittel zur Erkennung von Prioritätsinformationen im Zellenkopf aufweist und daß der mindestens eine Komparator und die Löschtabelle derart mit der Steuerlogik gekoppelt sind, daß bei der Definition der zu löschenden Frames nur diejenigen berücksichtigt werden, deren Prioritätswerte der zugehörigen ATM-Zellen niedrig sind, ist sichergestellt, daß zu denjenigen Informationen, die erneut übertragen werden müssen, nur diejenigen gehören, die eine niedrige Priorität haben.

Wenn die maximale Anzahl der definierten in der Löschtabelle hinterlegten Verbindungskennungen sieben beträgt, ergibt sich ein für die Praxis optimaler Wert für die Speicherverwaltung.

Eine weitere bevorzugte Ausführungsform sieht vor, daß die Zentralspeichersteuereinrichtung mindestens zwei Komparatoren mit unterschiedlichen vorgebbaren Schwellwerten aufweist derart, daß beim Überschreiten des oberen Schwellenwertes ein Starten der Löschtabelle und daß beim Unterschreiten des unteren Schwellenwertes ein Stoppen der Löschtabelle erfolgt. Hierdurch ergibt sich durch die unterschiedlichen Schwellwerte eine "Schalthysterese", wobei durch die Festlegung von deren Breite das Speichermanagement weiter optimiert werden kann.

Wenn vorgesehen ist, daß die Zentralspeichersteuereinrichtung Auslesemittel zur Erkennung von Zellenverlustprioritätsinformationen im Zellenkopf aufweist und daß ein weiterer Schwellwert für den Füllstand des Zentralspeichers von einem weiteren Komparator vorgebbar ist, der mit der Steuerlogik derart zusammenwirkt, daß oberhalb des weiteren Schwellwertes diejenigen ATM-Zellen gelöscht werden, deren Zellenverlustpriorität hoch ist, kann bereits bei einem solch niedrigen Speicher-füllstand, bei dem die oben beschriebene Löschtabelle noch nicht aktiviert wird, eine Vorauswahl für zu löschende Zellen getroffen werden, indem diejenigen Zellen mit einer hohen Verlustpriorität "vorsorglich" gelöscht werden.

Umgekehrt ist beim Einreichen nahezu der maximalen Speicherfüllhöhe vorteilhaft, wenn die Zentralspeichersteuereinrichtung Bestimmungskennungsmittel zur Erkennung von Bestimmungsinformationen im Zellenkopf aufweist und daß ein dritter Schwellwert von einem weiteren Komparator für den Füllstand des Zentralspeichers vorgebbar ist und daß dieser mit den Bestimmungserkennungsmitteln und der Steuerlogik derart zusammenwirkt, daß oberhalb des dritten Schwellwertes alle ATM-Zellen gelöscht werden, die nicht für die Zentraleinheit (CPU) bestimmte Kontrollzellen sind.

Schließlich ist die bevorzugte Anwendung der beschriebenen Speichermanagement-Strategie auf die Anpassungsschichten AAL 3/4 bzw. AAL 5 gerichtet.

Bevorzugte Verwendung findet das erfindungsgemäße System bei sehr kleinen Zellenspeichern, beispielsweise bei auf einem Chip integrierten Zellenspeicher mit einer Kapazität von 128 ATM-Zellen, bei denen es besonders auf eine optimierte Speicherverwaltung ankommt.

Die Erfindung wird im folgenden anhand eines Ausführungsbeispieles näher erläutert:
Dazu zeigen
- Fig. 1: ein Blockdiagramm einer Speichersteuereinrichtung für einen Zentralspeicher in einer Koppeleinrichtung,
- Fig. 2: ein zu Fig. 1 gehöriges Diagramm zur Erläuterung der Löschstrategie für den Zentralspeicher und
- Fig. 3: ein Zustandsdiagramm für die Löschtabelle entsprechend dem Blockdiagramm nach Fig. 1.

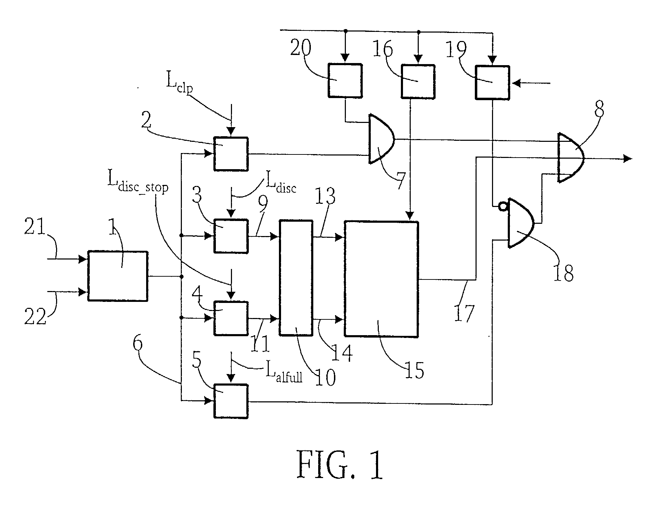

Fig. 1 zeigt einen Ausschnitt aus einem Blockschaltbild für ein Ausführungsbeispiel des erfindungsgemäßen Systems, welches die Speicherorganisation (buffer management) eines Zellenspeichers für 128 ATM-Zellen darstellt. Diese Speichergröße ist somit im Vergleich zur Anzahl der zu verarbeitenden Verbindungen, z.B. 1024, sehr gering. Dargestellt ist eine Zentralspeichersteuereinrichtung (switch), in die der ATM-Zellenstrom eintritt (cell arrived) bzw. austritt (cell emitted) bzw. gelöscht wird (cell discarded). Den Eingang dieser Zentralspeichersteuereinrichtung bildet ein Zähler 1 (counter), welcher inkrementiert wird (Eingang 21), wenn eine ATM-Zelle in den Speicher eintritt bzw. welcher dekrementiert wird (Eingang 22), wenn eine ATM-Zelle austritt oder gelöscht wird.

Der aktuelle Zählerstandswert wird dabei mit vier Komparatoren 2 bis 5 in Verbindung gebracht, denen jeweils feste Schwellwerte L_{CLP}, L_{disc}, L_{disc-stop} und L_{alfull} vorgegeben werden können. Den Ausgängen der Komparatoren 2 bis 5 nachgeordnet ist eine Steuerlogik, mittels derer entschieden wird, ob eine einzelne Zelle gelöscht wird (discard cell) oder nicht.

Der Eingang der Steuerlogik wird dabei gebildet durch eine Entnahmevorrichtung, die aus einem Auslesemittel 20, einer Prioritätserfassungseinrichtung 16 und einer Zellbestimmungsinformationserfassungseinrichtung 19 besteht und mittels der die im Zellenkopf (cell header) der jeweils gezählten ATM-Zelle vorliegende Information ausgelesen wird.

Aus dem Header werden die Bit-Information CLP (cell loss priority) durch das Auslesemittel 20, die Priorität der Zelle (prio) durch die Prioritätserfassungseinrichtung 16 und die Bestimmung durch die Zellbestimmungsinformationserfassungseinrichtung 19 ausgelesen. Die Zellbestimmungsinformationserfassungseinrichtung 19 erhält hierbei noch eine Kennung (port identifier) von einem nicht dargestellten Schaltungsteil, welchem Ziel (Port) die jeweilige Zelle zugeführt werden soll.

Die vier Komparatoren 2 bis 5 sind über Busleitungen 6 mit dem Zähler 1 verbunden. Der Ausgang des ersten Komparators 2, der einen Vergleich mit dem Vorgabewert L_{CLP} vornimmt, ist mit dem Eingang eines UND-Gatters 7 verbunden, dessen anderer Eingang durch die Information CLP=1 gebildet wird. Der Ausgang dieses ersten UND-Gatters 7 gelangt auf den Eingang eines ODER-Gatters 8.

Der Ausgang des zweiten Komparators 3 mit dem vorgebbaren Schwellenwert L_{disc} ist mit dem Set-Eingang 9 eines Flip-Flops 10 verbunden. Der Ausgang des dritten Komparators 4, der mit dem vorgebbaren Schwellenwert L_{disc stop} beaufschlagt ist, ist mit dem Reset-Eingang 11 des Flip-Flops 10 verbunden. Die Start- und Stop-Ausgänge 13 und 14 des Flip-Flops 10 sind mit einer Löschtabelle 15 (discard table) gekoppelt. Ein weiterer Eingang der Löschtabelle 15 wird durch den niedrigprioren Ausgang (prio=0) der Prioritätserfassungseinrichtung 16 für den Zellenkopf (cell header) verbunden. Der Ausgang 17 der Löschtabelle 15 bildet ebenfalls einen Eingang des ODER-Gatters 8.

Schließlich ist der Ausgang des vierten Komparators 5, der mit dem Schwellenwert L_{alfull} gekoppelt ist, mit dem Eingang eines weiteren UND-Gatters 18 verbunden. Der andere Eingang dieses weiteren UND-Gatters 18 ist über einen invertierenden Eingang mit dem Ausgang der Zellbestimmungsinformationserfassungseinrichtung 19 verbunden. Diese gibt an, ob eine Zelle für die Zentraleinheit (CPU) bestimmt ist bzw. von ihr kommt. Der Ausgang dieses weiteren UND-Gatters 18 bildet den dritten Eingang des ODER-Gatters 8.

Das ODER-Gatter 8 bewirkt die Löschung der jeweiligen Zelle, dann, wenn an einem seiner Eingänge einen entsprechende Information vorliegt. Das Löschen der Zelle erfolgt also dann, wenn
- (1): die Zellenverlustpriorität gleich 1 ist und der Komparator 2 feststellt, daß der Zellenstand über L gleich L_{CLP} ist oder
- (2): wenn aus der Löschtabelle 15 eine entsprechende Information gegeben wird, oder
- (3): dann, wenn aus dem vierten Komparator 5 beim Überschreiten des Zählerstandes L_{alfull} eine entsprechende Information gegeben wird und die Zelle nicht für die Zentraleinheit (CPU) bestimmt ist oder von dieser stammt.

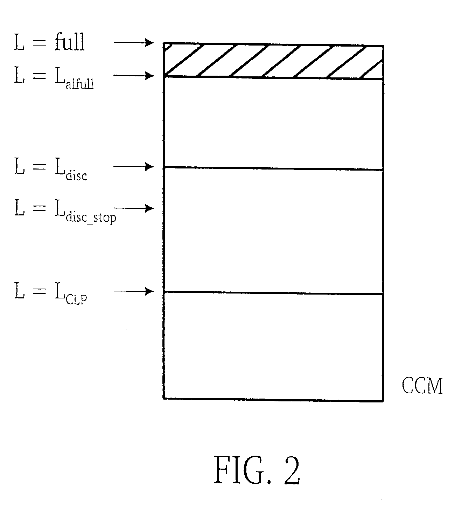

Im einzelnen ergibt sich also folgende Betriebsweise (vgl. Fig. 2):
Vorausgesetzt, daß der Füllstand des hier nicht dargestellten zentralen Zellenspeichers CCM zunächst auf sehr niedrigem Niveau ist, d.h. unterhalb der Linie L = L_{CLP}, werden sämtliche eintreffenden Zellen zwischengespeichert. Dies bedeutet, daß unabhängig von der jeweiligen Priorität und davon, ob CLP=0 oder =1 ist, alle Zellen abgelegt werden, und zwar für jede Verbindung VC.

Wird nun der erste Schwellenwert L_{CLP} erreicht, werden nur noch diejenigen ATM-Zellen zwischengespeichert, die die CLP gleich 0 haben, während diejenigen mit der CLP gleich 1 gelöscht werden. Somit werden diejenigen ATM-Zellen, die eine hohe Verlustpriorität haben, gelöscht.

Steigt der Füllstand gleichwohl weiter an, erfolgt beim nächsten Schwellwert L=L_{disc} eine zusätzliche Maßnahme zur Speicherreduzierung, die wie folgt beschrieben wird:
Es wird zunächst die Löschtabelle 15 beschrieben, in der bis zu sieben Einträge vorhanden sind, die mit den VC's der vorbeiströmenden Niedrig-Prioren-Zellen (prio=0) gefüllt sind. Beispiele hierfür sind solche Zellen, die dem ABR (available bit rate) Modus entstammen. Diese VC-Werte definieren dann diejenigen Pakete (Frames), die gelöscht werden sollen. Die zu diesen VC's gehörigen Zellen werden somit beim Eintreffen in die Löscheinrichtung, also bereits vor dem Speicher, gelöscht.

Wenn nun der Füllstand des Zählers wieder auf einen Wert vom L_{disc-stop} abfällt, wird die soeben beschriebene Verfahrensweise unterbrochen, indem die Löschtabelle 15 gestoppt wird. Es werden wieder alle ATM-Zellen zwischengespeichert, die eine von eins verschiedene CLP-Priorität haben.

Wenn demgegenüber der Füllstand L=L_{alfull} erreicht wird, werden gar keine Zellen mehr im Speicher abgespeichert sondern nur noch diejenigen, die für die Zentraleinheit (CPU) bestimmt sind bzw. von ihr stammen. Alle anderen Zellen werden nicht mehr akzeptiert.

Steigt der Füllstand noch weiter an, werden sämtliche Zellen gelöscht und zwar unabhängig von dem VC-Wert und der jeweiligen Priorität.

Die erfindungsgemäße Betriebsweise im Füllstandsbereich zwischen L=L_{CLP} und L=L_{alfull} hat den Vorteil, daß nur eine bestimmte Anzahl von Frames noch einmal übertragen werden müssen (retransmission), nämlich im Bereich unterhalb L_{disc} nur die Frames, die CLP=1 enthalten und im Bereich zwischen L_{disc} und L_{alfull} nur diejenigen, die CLP=1 und den in der Löschtabelle 15 niedergelegten VC-Wert aufweisen.

Dies ist ein bedeutender Vorteil gegenüber bekannten Zellspeicherlöschverfahren für kleine Zellenspeicher, bei denen die Frames zufällig beeinflußt werden und somit häufig eine Retransmission aller willkürlich getroffenen Frames erforderlich ist.

Im VBR-Fall können durch statistisches Multiplexen der Zellen lange Bursts entstehen und zum Überlauf führen. Der CBR- (constant bit rate) Datenverkehr ist demgegenüber von dem erfindungsgemäß durchgeführten Verfahren im wesentlichen nicht betroffen, weil diese Verkehrsarten nur sehr wenig zum Überlauf des Speichers beitragen im Vergleich zum ABR- bzw. VBR-Datenverkehr.

Die Schwellenwerte für die Komparatoren 2 bis 5 können frei dem gewünschten Strategieverhalten angepaßt werden. Beispielsweise können die Schwellwerte L_{CLP} und L_{disc} vertauscht werden.

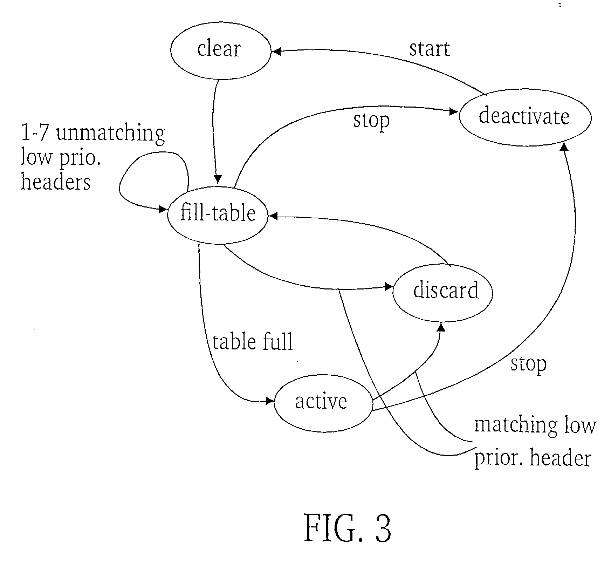

Zur weiteren Erläuterung des erfindungsgemäßen Systems wird ein Zustandsdiagramm für die Löschtabelle 15 herangezogen, gemäß dem die Löschtabelle 15 geschrieben, gelesen und ausgewertet wird:
Ausgangszustand im Zustandsdiagramm nach Fig. 3 ist der Zustand "deactivate".

Wenn durch das Erreichen des vorgegebenen Schwellenwertes L_{disc} der zweite Komparator das Flip-Flop setzt, erhält die Löschtabelle den "Start"-Befehl, wodurch zunächst der Zustand "clear" erreicht wird und anschließend ein Füllen der Löschtabelle erfolgt. Beim Füllen der Löschtabelle ("fill-table") werden die seriell einlaufenden Zellenköpfe der ATM-Zellen untersucht, und zwar nur diejenigen mit der niedrigen Priorität (prio=0 am Ausgang von 16). Jeder VC-Wert, der erfaßt wird und noch nicht in der Tabelle abgelegt ("unmatched") ist, wird abgespeichert, und zwar solange, bis die Tabelle mit sieben VC-Werten gefüllt ist. Wenn eine Zelle eintritt, deren VC-Wert bereits in der Tabelle abgelegt ist, d.h. "matched", wird diese Zelle gelöscht ("discard").

Nachdem die Löschtabelle gänzlich gefüllt ist ("table full"), arbeitet die Löscheinrichtung im Zustand "active" so, daß immer dann, wenn ein "Matchen" im Bezug auf einen niedergelegten VC-Wert erfolgt, die Zelle gelöscht wird.

Wird andererseits die Löschtabelle beim entsprechenden Absinken des Füllstandes durch den Stop-Ausgang des Flip-Flops rückgesetzt, gelangt sie wieder in den "deactivate"-Ausgangzustand zurück.

## Patentansprüche

1. Koppeleinrichtung (switch) für ein lokales nach dem asynchronen Transfermodus (ATM) arbeitendes lokales Netzwerk, welches einen Zentralspeicher (CCM) zur Zwischenspeicherung von auf Zubringerleitungen eintreffenden aus einzelnen ATM-Zellen gebildete Paketen (frames), eine Zentralspeichersteuereinrichtung für die Steuerung der Speicherung im Zentralspeicher (CCM) und des Einlese- und Auslesevorganges der Pakete in den bzw. aus dem Zentralspeicher (CCM) und einen von der Zentralspeichersteuereinrichtung gesteuerten Demultiplexer zur Weiterleitung der Pakete (Frames) auf Abnehmerleitungen enthält, wobei darüber hinaus Zählmittel (1) zum Zählen der in den Zentralspeicher (CCM) eintretenden ATM-Zellen und Löschmittel zum paketweisen Löschen von ATM-Zellen zur Überlaufverhinderung des Zentralspeichers (CCM) vorgesehen sind,
dadurch gekennzeichnet,
daß die Zentralspeichersteuereinrichtung mindestens eine dem Zentralspeicher vorgeordnete Komparatoreinrichtung (2 bis 5) aufweist, die mit den Zählmitteln (1) und einer Steuerlogik derart zusammenwirkt, daß beim Erreichen eines vorgebbaren Schwellenwertes (L_{disc}) für den Füllstand des Zentralspeichers (CCM) eine vorgebbare Anzahl von Verbindungen (VC) anhand der Reihenfolge des Eintreffens der der jeweiligen Verbindung (VC) zugeordneten ATM-Zellen definiert werden, und daß jede ATM-Zelle des zum definierten VC-Wert gehörigen Paketes vor dem Eintreffen in den Zentralspeicher gelöscht wird.

2. Koppeleinrichtung nach Anspruch 1,
dadurch gekennzeichnet,
daß der mindestens eine Komparator (2 bis 5) mit einer Löschtabelle (15) verbunden ist, die die Verbindungskennungen (VC) der zu löschenden Frames enthält, wobei die Löschtabelle (15) die Löschmittel zum Löschen jeder eintreffenden ATM-Zelle aktiviert, deren Verbindungskennung (VC) in der Löschtabelle (15) abgelegt ist.

3. Koppeleinrichtung nach Anspruch 2,
dadurch gekennzeichnet,
daß die Zentralspeichersteuereinrichtung Auslesemittel (15) zur Erkennung von Prioritätsinformationen im Zellenkopf aufweist und daß der mindestens eine Komparator (2 bis 5) und die Löschtabelle (15) derart mit der Steuerlogik gekoppelt sind, daß bei der Definition der zu löschenden Frames nur diejenigen berücksichtigt werden, deren Prioritätswerte der zugehörigen ATM-Zellen niedrig sind.

4. Koppeleinrichtung nach einem der Ansprüche 1 bis 3,
dadurch gekennzeichnet,
daß die maximale Anzahl der definierten in der Löschtabelle (15) hinterlegten Verbindungskennungen sieben beträgt.

5. Koppeleinrichtung nach einem der Ansprüche 1 bis 4,
dadurch gekennzeichnet,
daß die Zentralspeichersteuereinrichtung mindestens zwei Komparatoren (3, 4) mit unterschiedlichen vorgebbaren Schwellwerten (L_{disc-stop}, L_{disc}) aufweist derart, daß beim Überschreiten des oberen Schwellenwertes (L_{disc}) ein Starten der Löschtabelle (15) und daß beim Unterschreiten des unteren Schwellenwertes (L_{disc-stop}) ein Stoppen der Löschtabelle (15) erfolgt.

6. Koppeleinrichtung nach einem der vorhergehenden Ansprüche,
dadurch gekennzeichnet*,*
daß die Zentralspeichersteuereinrichtung Auslesemittel (20) zur Erkennung von Zellenverlustprioritätsinformationen im Zellenkopf aufweist und daß ein weiterer Schwellwert (L_{clp}) für den Füllstand des Zentralspeichers von einem weiteren Komparator (2) vorgebbar ist, der mit der Steuerlogik derart zusammenwirkt, daß oberhalb des weiteren Schwellwertes diejenigen ATM-Zellen gelöscht werden, deren Zellenverlustpriorität (CLP) hoch ("1") ist.

7. Koppeleinrichtung nach einem der vorhergehenden Ansprüche,
dadurch gekennzeichnet,
daß die Zentralspeichersteuereinrichtung Bestimmungserkennungsmittel (19) zur Erkennung von Bestimmungsinformationen im Zellenkopf aufweist und daß ein dritter Schwellwert (L_{alfull}) von einem weiteren Komparator (5) für den Füllstand des Zentralspeichers vorgebbar ist und daß dieser mit den Bestimmungserkennungsmitteln (19) und der Steuerlogik derart zusammenwirkt, daß oberhalb des dritten Schwellwertes alle ATM-Zellen gelöscht werden, die nicht für die Zentraleinheit (CPU) bestimmte Kontrollzellen sind.

8. Koppeleinrichtung nach einem der vorhergehenden Ansprüche,
dadurch gekennzeichnet,
daß als ATM-Anpassungsschicht AAL 3/4 oder AAL 5 verwendet wird.

9. Verwendung eines Systems nach einem der vorhergehenden Ansprüche zum Speichermanagement in kleinen Zellenspeichern, insbesondere solchen mit Zellengrößen von weniger als 1000 Zellen.
